# EUROPÄISCHE PATENTSCHRIFT

(11) **EP 0 804 126 B1**
(45) Veröffentlichungstag und Bekanntmachung des Hinweises auf die Patenterteilung: **11.04.2001**
(21) Anmeldenummer: 95936411.8
(22) Anmeldetag: 20.11.1995
(51) Int. Cl.: A61C 8/00, A61C 7/12

(54) **SUPRAKONSTRUKTION FÜR EIN ENOSSALES ZAHNIMPLANTAT**
SUPERSTRUCTURE FOR AN ENDOSTEAL DENTAL IMPLANT
SUPERSTRUCTURE POUR IMPLANT DENTAIRE INTRA-OSSEUX

(43) Veröffentlichungstag der Anmeldung: 05.11.1997
(73) Patentinhaber: Schiel, Harald, 4126 Bettingen (CH)
(72) Erfinder: SCHIEL, Harald, CH-4126 Bettingen (CH); FRISCHHERZ, Rolf, CH-4900 Langenthal (CH); MESSERLI, Martin, CH-2544 Bettlach (CH)
(74) Vertreter: Lusuardi, Werther Giovanni, Dr.
(86) Internationale Anmeldenummer: CH9500273
(87) Internationale Veröffentlichungsnummer: WO9718771

(56) Entgegenhaltungen:
- WO-A-92/14417
- WO-A-96/19946
- US-A- 4 988 292
- US-A- 5 071 345
- US-A- 5 082 442

## Beschreibung

Die Erfindung bezieht sich auf eine Suprakonstruktion für ein enossales Zahnimplantat gemäss dem Oberbegriff des Patentanspruchs 1 sowie einer kieferorthopädische Vorrichtung mit einer solchen, auf ein Zahnimplantat montierten Suprakonstruktion.
Die Anzahl von kieferorthopädischen Behandlungen bei Erwachsenen und Jugendlichen zur Korrektur der Zahnstellung ist steigend. Bisher wurden Zahnstellungskorrekturen teils mittels eines Kopfbandes (Head-Gear) vorgenommen, mit welchem Kräfte auf die an den Zähnen anliegenden Bügel und Spangen aufgebracht werden können. Das Kopfband wird in der Regel über 8 Stunden auf die Zahnreihen einwirken. Das Kopfband ist somit nur intermittierend wirksam und wird zudem vom Träger als äusserst lästig empfunden.
Aus der US-A-5 071 345 ist eine Zahnkrone gemäss dem Oberbegriff des Anspruchs 1 bekannt. Sie weist jedoch keinen durchgehenden, nach oben offen Schlitz auf, so dass kieferorthopädische Drähte nur einseitig und nur von der Seite darin fixierbar sind.
Aus der US-A-5 082 442 ist eine weitere Zahnkrone bekannt, mit einem durchgehenden, jedoch nach oben geschlossenen Durchgangskanal.

Hier will die Erfindung Abhilfe schaffen. Der Erfindung liegt die Aufgabe zugrunde, eine Suprakonstruktion für ein enossales Zahnimplantat zu schaffen, welche als Verankerung für die Einleitung von Kräften bei kieferorthopädischen Korrekturen dient.

Die Erfindung löst die gestellte Aufgabe mit einer Suprakonstruktion, welche die Merkmale des Anspruchs 1 aufweist, sowie einer kieferorthopädischen Vorrichtung, welche die Merkmale des Anspruchs 9 aufweist.

Weitere vorteilhafte Ausgestaltungen der Erfindung sind in den abhängigen Ansprüchen gekennzeichnet.

Die durch die Erfindung erreichten Vorteile sind im wesentlichen die folgenden:
- Es muss kein Kopfband (Head-Gear) verwendet werden, was eine erhebliche Komfortverbesserung bedeutet;
- Die Verschiebekraft (Verankerung) wirkt nicht nur intermittierend sondern permanent über 24 Stunden; und
- Da die Suprakonstruktion als Verankerungsstelle an jeder beliebigen anatomischen Position, an welcher ein Dentalimplantat fixierbar ist, angebracht werden kann, lassen sich kieferorthopädische Drähte nicht nur an den Zahnaussenseiten (bukkal) sondieren auch an den Zahninnenseiten (lingual) anbringen.
   Dies bringt Vorteile ästhetischer Art, welche vorallem bei der Behandlung von Erwachsenen hoch einzustufen sind.

Die Erfindung und Weiterbildungen der Erfindung werden im folgenden anhand der teilweise schematischen Darstellungen eines Ausführungsbeispiels noch näher erläutert.

Es zeigen:
Fig. 1 einen Längsschnitt durch die erfindungsgemässe kieferorthopädische Vorrichtung in Explosionsdarstellung;
Fig. 2 eine Aufsicht auf die Suprakonstruktion der kieferorthopädische Vorrichtung nach Fig. 1;
Fig. 3 eine teilweise Seitenansicht der Suprakonstruktion der kieferorthopädische Vorrichtung nach Fig. 1; und
Fig. 4 einen Längsschnitt durch das Zahnimplantat der kieferorthopädische Vorrichtung nach Fig. 1.

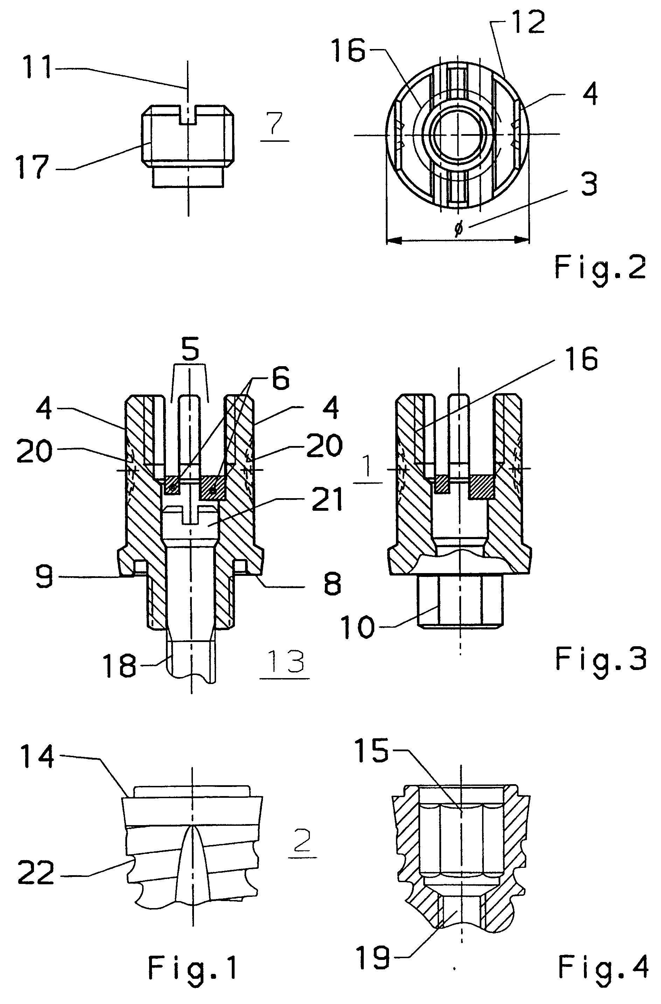

Die in Fig. 1 dargestellte kieferorthopädische Vorrichtung besteht im wesentlichen aus einer auf ein enossales Zahnimplantat 2 montierten Suprakonstruktion 1, in welcher entweder (wie in Figur 1 gezeigt) mit einer Schraube 7 ein kieferorthopädisches Element 6, z.B. einem Draht, befestigbar oder ohne Schraube an ihrer Fläche 4 aufklebbar ist.

Zur besseren Orientierung werden nachfolgend einige geometrische Elemente der Suprakonstruktion 1 definiert:
A eine zum Zahnimplantat 2 koaxiale Längsachse 11;
B) eine, einen bukkalen, lingualen, mesialen und distalen Bereich aufweisende, äussere Mantelfläche 12; und
C) eine für den Anschluss an das Zahnimplantat 2 bestimmte, orthogonal zur Längsachse 11 stehende Ringfläche 8.

Im bukkalen und lingualen Bereich der Mantelfläche 12, sind parallel zur Längsachse 11 verlaufende, gegenüber dem maximalen Aussendurchmesser 3 abgeflachte Flächen 4 vorgesehen, auf welchen kieferorthopädische Brackets (insbesondere Klebe-Brackets) oder Vierkantbogen befestigbar sind. Zu diesem Zweck sind die Flächen 4 vorzugsweise planar geschliffen und aufgerauht. Die Rauhheit Rₐ der Fläche 4 liegt vorzugsweise im Bereich von 3,3 - 12,5 µm. Zusätzlich können noch Retentionen 20, vorzugsweise in Form von Rillen, in die Fläche 4 eingelassen sein.

Die Suprakonstruktion 1 weist ferner vom medialen zum distalen Bereich der Mantelfläche 12 verlaufende, durchgehende Schlitze 5 auf, in welchen kieferorthopädische Drähte 6 von oben eingeführt werden können und mittels der Schraube 7 radial und axial fixiert werden können. Statt der Schraube 7 können natürlich auch andere bekannte Fixationssysteme, z.B. Bajonettverschlüsse oder Klebe-Verbindungen, verwendet werden.

Bei Verwendung einer Schraube 7 weist die Suprakonstruktion 1 ein zur Längsachse 11 koaxiales Innengewinde 16 auf, in welches die mit einem korrespondierenden Aussengewinde 17 versehene Schraube 7 einführbar ist.

Damit eine rotationsstabile Verbindung der Suprakonstruktion 1 mit dem enossalen Dentalimplantat 2 gewährleistet ist, besitzt die Suprakonstruktion 1 - wie in den Fig. 3 und 4 dargestellt - ein hexagonales Einsatzstück 10, welches in einen entsprechenden Innensechskantes 15 des Zahnimplantates 2 passt. Die Verbindung zwischen Suprakonstruktion 1 und Dentalimplantat 2 erfolgt mittels der Fixationsschraube 13, welche von oben in das Innere der Suprakonstruktion 1 einführbar ist und mittels ihres Aussengewindes 18 in ein entsprechendes Innengewinde 19 des Zahnimplantates 2 einschraubbar ist.
Dabei ist die Anschlussgeometrie vorzugsweise derart ausgestaltet dass die Ringfläche 8 der Suprakonstruktion 1 einen Lichtspalt 9 von ca. 5 µm zur korrespondierenden Ringfläche 14 des Zahnimplantats 2 aufweist, was den Bakteriendurchtritt minimiert.

Die von oben gemessene Tiefe der Schlitze 5 reicht maximal bis zum Kopf 21 der Fixationsschraube 13. Sind wie in Fig. 1 dargestellt zwei Schlitze 5 für verschieden starke Drähte 6 vorgesehen, so ist die freie Tiefe der Schlitze 5 bei eingelegtem Draht 6 vorzugsweise gleich gross, d.h. für den breiteren Schlitz, der einen breiteren Draht aufnehmen muss ist die Tiefe entsprechend grösser zu wählen.

Das Dentalimplantat 2 wird an einer zahnlosen Stelle des Zahnbogens oder auch palatinal in den Knochen eingebracht.

## Patentansprüche

1. Suprakonstruktion (1) für ein enossales Zahnimplantat (2) mit
A) einer Deckfläche, einer Grundfläche und einer die Deck- und Grundfläche durchstossenden Längsachse (11);
B) einer, einen bukkalen, lingualen, mesialen und distalen Bereich aufweisenden, äusseren Mantelfläche (12) ;
C) einer für den Anschluss an ein enossales Zahnimplantat (2) bestimmten, orthogonal zur Längsachse (11) stehenden Ringfläche (8) ;
D) Mitteln zur Aufnahme eines kieferorthopädischen Elementes (6) ; und
E) einem an der Grundfläche gelegenen Einsatzstück (10) zur rotationsstabilen Verbindung mit einem enossalen Zahnimplantat (2),
**gekennzeichnet durch**
F) die Mittel zur Aufnahme eines kieferorthopädischen Elementes (6) aus einem vom medialen zum distalen Bereich der Mantelfläche (12) verlaufenden, zur Deckfläche hin geöffneten, durchgehenden Schlitz (5) bestehen, welcher der Aufnahme von kieferorthopädischen Drähten (6) dient.

2. Suprakonstruktion (1) nach Anspruch 1, dadurch gekennzeichnet, dass die Mittel zur Aufnahme eines kieferorthopädischen Elementes aus einer im bukkalen und/oder lingualen Bereich der Mantelfläche (12), parallel zur Längsachse (11) verlaufenden, gegenüber dem maximalen Aussendurchmesser (3) abgeflachten, vorzugsweise planaren Fläche (4) bestehen, welche der Aufnahme von kieferorthopädischen Brackets dient.

3. Suprakonstruktion (1) nach Anspruch 2, dadurch gekennzeichnet, dass die Fläche (4) aufgerauht ist.

4. Suprakonstruktion (1) nach Anspruch 3, dadurch gekennzeichnet, dass die Rauhheit Rₐ der Fläche (4) im Bereich von 3,3 - 12,5 µm liegt.

5. Suprakonstruktion (1) nach Anspruch 2, dadurch gekennzeichnet, dass die Fläche (4) mit Retentionen (20), vorzugsweise in Form von Rillen, versehen ist.

6. Suprakonstruktion (1) nach einem der Ansprüche 1 - 5, dadurch gekennzeichnet, dass die Mittel zur Aufnahme eines kieferorthopädischen Elementes (6) aus zwei Schlitzen (5) bestehen.

7. Suprakonstruktion (1) nach einem der Ansprüche 1 - 6, dadurch gekennzeichnet, dass das Einsatzstück (10) eine hexagonale Form ausweist, welche in einen entsprechenden Innensechskant (15) eines Zahnimplantates (2) passt.

8. Suprakonstruktion (1) nach Anspruch 6, dadurch gekennzeichnet, dass sie ein zur Längsachse (11) koaxiales Innengewinde (16) aufweist, zur Aufnahme einer mit einem korrespondierenden Aussengewinde (17) versehenen Schraube (7), welche der radialen und axialen Fixierung von in den Schlitzen (5) eingeführten kieferorthopädischen Elementen (6) dient.

9. Kieferorthopädische Vorrichtung mit einer auf ein enossales Zahnimplantat (2) montierten Suprakonstruktion (1) nach einem der Ansprüche 1 - 8.

10. Kieferorthopädische Vorrichtung nach Anspruch 9, dadurch gekennzeichnet, dass die Ringfläche (8) einen Lichtspalt (9) von 4 - 6 µm, vorzugsweise 4,5 - 5,5 µm zur Ringfläche (14) des Zahnimplantats (2) aufweist.

## Claims

1. Superstructure (1) for an endosteal dental implant (2) with
A) a covering area, a base area and a longitudinal axis (11) penetrating the covering and the base area;
B) an outer surface area (12) having a buccal, lingual, mesial and distal region;
C) an annular area (8) orthogonal to the longitudinal axis (1) for the connection to a dental implant (2);
D) means for the acceptance of an orthodontic element (6); and
E) an insert piece (10) lying at the base area to the rotation stable junction with a dental implant (2),
characterized in that
F) the means for the acceptance of an orthodontic element (6) consist of a penetrating slot (5) extending from the medial to the distal region of the outer surface area (12) and open towards the covering area which serves to the acceptance of orthodontic wires (6).

2. Superstructure according to claim 1, characterized in that the means for the acceptance of an orthodontic element consist of a preferably planar area (4) in the buccal and/or lingual region of the outer surface area (12) running parallel to the longitudinal axis (11) and flattened opposite of the maximal outer diameter which serve for the acceptance of orthodontic brackets.

3. Superstructure according to claim 1 or 2, characterized in that the area (4) is roughened.

4. Superstructure according to one of the claims 1 to 3, characterized in that the roughness Rₐ of the area (4) amounts between 3,3 to 12,5 µm.

5. Superstructure according to claim 2, characterized in that the area (4) is provided with retentions (20), preferably in the form of grooves.

6. Superstructure according to claim 1 to 5, characterized in that the means for the acceptance of an orthodontic element (6) consist of two slots (5).

7. Superstructure according to claim 1 to 6, characterized in that the insert piece (10) has a hexagonal shape that matches with a corresponding hexagonal socket (15) of a dental implant (2).

8. Superstructure according to claim 6, characterized in that it provides an internal thread (16) coaxial to the longitudinal axis (11) for the acceptance of a screw (7) provided with a corresponding external thread (17), which serves to the radial and axial fixation of orthodontic elements (6) being inserted in the slots (5).

9. Orthodontic device with a superstructure (1) mounted on a dental implant (2 according to one of the claims 1 to 8.

10. Orthodontic device according to claim 9, characterized in that the annular area (8) has a light gap (9) of 4 - 6 µm, preferably 4,5 - 5,5 µm to the annular area (14) of the dental implant (2).

## Revendications

1. Superstructure (1) pour un implant dentaire (2) intra-osseux, comprenant :
A) une surface de couvercle, une surface de base et un axe longitudinal (11) qui traverse la surface de couvercle et la surface de base ;
B) une surface d'enveloppe extérieure (12) qui présente une zone buccale, une zone linguale, une zone médiale et une zone distale ;
C) une surface annulaire (8) placée perpendiculairement à l'axe longitudinal (11) et destinée au raccordement à un implant dentaire (2) intra-osseux ;
D) des moyens de réception d'un élément orthopédique maxillaire (6) ; et
E) une pièce de garniture (10) placée sur la surface de base, pour une liaison stable en rotation à un implant dentaire (2),
caractérisé en ce que
F) les moyens de réception d'un élément orthopédique maxillaire (6) sont constitués d'une fente (5) continue, ouverte en direction de la surface de couvercle, qui s'étend de la zone médiale à la zone distale de la surface d'enveloppe (12) et qui sert à recevoir des fils orthopédiques maxillaires (6).

2. Superstructure (1) selon la revendication 1, caractérisée en ce que les moyens de réception d'un élément orthopédique maxillaire sont constitués d'une surface (4) de préférence plane, aplatie par rapport au diamètre extérieur maximum (3), qui s'étend parallèlement à l'axe longitudinal (11) dans la zone buccale et/ou la zone linguale de la surface d'enveloppe (12) qui sert à la réception de consoles orthopédiques maxillaires.

3. Superstructure (1) selon la revendication 2, caractérisée en ce que la surface (4) est rendue rugueuse.

4. Superstructure (1) selon la revendication 3, caractérisée en ce que la rugosité Rₐ de la surface (4) est comprise dans la plage de 3,3 à 12,5 µm.

5. Superstructure (1) selon la revendication 2, caractérisée en ce que la surface (4) est dotée de rétentions (20) qui présentent de préférence la forme d'une rainure.

6. Superstructure (1) selon l'une des revendications 1 à 5, caractérisée en ce que les moyens de réception d'un élément orthopédique maxillaire (6) sont constitués de deux fentes (5).

7. Superstructure (1) selon l'une des revendications 1 à 6, caractérisée en ce que la pièce de garniture (10) présente une forme hexagonale qui s'adapte dans un creux intérieur à six pans (15) correspondant d'un implant dentaire (2).

8. Superstructure (1) selon la revendication 6, caractérisée en ce qu'elle présente un filet intérieur (16) coaxial par rapport à l'axe longitudinal (11), pour la réception d'une vis (7) dotée d'un filet extérieur (17) correspondant, qui sert à la fixation radiale et axiale d'éléments orthopédiques maxillaires (6) insérés dans la fente (5).

9. Dispositif orthopédique maxillaire présentant une superstructure (1) selon l'une des revendications 1 à 8, montée sur un implant dentaire intra-osseux (2).

10. Dispositif orthopédique maxillaire selon la revendication 9, caractérisé en ce que la surface annulaire (8) présente un petit interstice (9) de 4 à 6 µm, de préférence de 4,5 à 5,5 µm par rapport à la surface annulaire (14) de l'implant dentaire (2).
